# EUROPEAN PATENT SPECIFICATION

(11) **EP 1 050 208 B1**
(45) Date of publication and mention of the grant of the patent: **30.06.2004**
(21) Application number: 00660077.9
(22) Date of filing: 26.04.2000
(51) Int. Cl.: A01G 23/091

(54) **Apparatus for treating stumps**
Vorrichtung zum Behandeln von Baumstümpfen
Dispositif pour traiter des souches d'arbres

(30) Priority: 03.05.1999 FI 991005
(43) Date of publication of application: 08.11.2000
(73) Proprietor: Ponsse Oyj, 74200 Vieremä (FI)
(72) Inventor: Hyvönen, Jorma, 74120 IIsalmi (FI)
(74) Representative: Niemi, Hakan

(56) References cited:
- WO-A-95/27599
- WO-A-98/53667

## Description

The present invention relates to an apparatus for treating stumps according to the preamble of claim 1.

### BACKGROUND OF THE INVENTION

Treating stumps with a biocide when a tree is felled, to prevent tree mycosis tends today to be an obligatory measure especially in the distribution area of root rot in spruce (heterobasidion parviporum) and to a lesser extent in the distribution area of root rot in pine (heterobasidion annosum s.str). This area covers southern parts of Finland and Sweden, for instance, and the greatest part of forestry areas in the rest of Europe. The increased need for this treatment is mainly caused by the fact that especially during summer-time intermediate cutting, the bare stumps act as a growth base for the rot fungi which also spread to growing trees. Urea which prevents the spores from spreading into the stump, or a spore solution of phlebiopsis gigantea can be used to treat the stumps. Phlebiopsis gigantea spreads into the stump before root rot, but is harmless to growing trees.

A stump can be treated by hand-spraying, but in mechanized timber harvesting, it is usually done by means of a specific apparatus for treating stumps, built in the felling device. Thus, there are apparatuses for spraying biocide during sawing on the stump through channels in the saw flange or during felling through separate nozzles.

A typical stump-treating apparatus of a felling machine used today comprises a saw flange or nozzles equipped with a fluid channel in the felling device and a possible cut-off valve for timing the spraying. In this case, the biocide is led to the felling device from the felling machine underbody through hoses while the solution container and the pressure-generating pump is located on top of the underbody so that filling the container is easily accomplished. The pump generating the required spraying pressure is usually an electric membrane pump or a hydraulic piston pump. Equipment like this is presented for instance in the publications WO 97/25855 and WO 98/53667. Equipment for directing the cut-off valve is presented for instance in the publication FI 97641.

Several studies have been made on stump treatment in Finland by Metsäteho and in Sweden by Skogforsk. The results are disclosed in the following publications, for instance:
Metsäteho review 3/94: "Kantokäsittely koneellisessa hakkuussa, Stump treatment in mechanized timber harvesting" / Markku Mäkelä, Timo Ari, Kari Korhonen, Katriina Lipponen
Skogforsk Resultat no. 14 1994: "Rotröta i Sverige" (Root rot in Sweden)
Skogforsk Resultat no. 17 1996: "Stubbetreating med pergamentsvamp - klarar svampen värmen och trycket" (Treating stumps with phlebiopsis gigantea - can the fungus cope with the heat and pressure)
Skogforsk Resultat no. 22 1997: "Preparat mot rotröta kan skada markvegetationen" (biocides against root rot may damage vegetation)

Conducted studies have up till know shown that the most reliable method is to spray the biocide through the saw flange of the felling device. There is, however, much to improve in this method. Depending on the diameter of the tree, the distribution of the biocide is not even enough with the same saw flange. On the other hand, when using prior art solutions, some of the biocide is wasted, which increases the treatment and material costs of stump treatment. In addition, saw flanges are easily blocked by tree resin and impurities, thus substantially impeding the distribution of the biocide.

### BRIEF DESCRIPTION OF THE INVENTION

The object of the present invention is to remove the drawbacks of prior art and provide a completely novel solution, thus improving the prior art.

This object is achieved by an apparatus for treating stumps, which is characterized by what is stated in the claims of this invention. More specifically, the apparatus of the present invention is mainly characterized by what is stated in the characterizing part of claim 1.

The invention is thus based on the idea that it is possible to adjust the amount of biocide spray during sawing with said apparatus of the invention. This adjustment must then be controlled by a computer arranged in the apparatus so as to derive an adequate benefit from it.

### BRIEF DESCRIPTION OF THE FIGURES

In the following, the invention will be described by means of the attached drawings, in which
Figure 1 shows a preferred structure of the stump-treatment apparatus of the invention when using a continuous pump, and
Figure 2 shows the stump-treatment apparatus according to Figure 1 implemented with a double-piston pump.

### DETAILED DESCRIPTION OF THE INVENTION ,

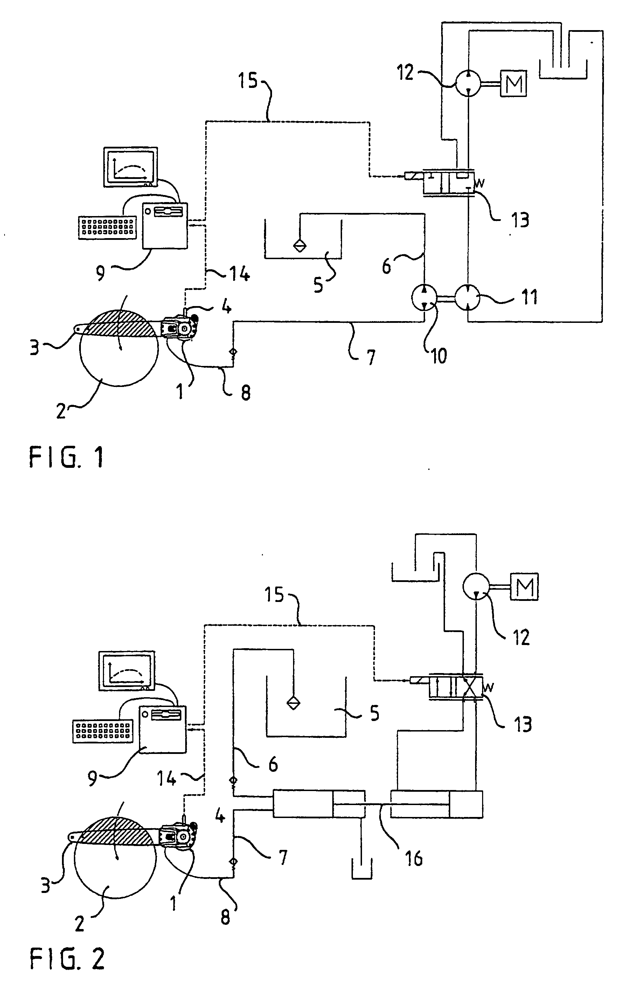

Figure 1 shows a preferred structure of the stump-treatment apparatus of the invention. In this case, the apparatus comprises the following parts marked on the figure with corresponding reference numbers.

The invention thus comprises a felling machine having a felling device arranged to it, which comprises a sawing device 1 and a measuring instrument measuring the diameter of the tree 2 being felled. When felling a tree, the location of a saw flange 3 in the sawing device can continuously be monitored through a sensor 4 in the sawing device. The saw flange comprises at least one supply channel for distributing biocide, to which the biocide is led from a separate container 5 along a pipeline 6, 7 and 8. A correct amount of biocide at each time is fed to the saw flange controlled by a computer 9 attached to the apparatus by using a biocide pump 10 which is controlled by a hydraulic motor 11, for instance. This type of a hydraulic motor receives the required pressure from a power unit 12 in the felling machine, the power unit being a diesel engine, for instance, in the felling machine, with a hydraulic pump arranged to it.

The apparatus for treating stumps of the invention works as follows. The power unit 12 creates a pressure distributed by means of a medium, preferably a hydraulic pressure, the pressure being controlled by a proportional valve 13 in the apparatus. When the tree 2 is being sawed, the computer 9 measures the location of the saw flange 3 by means of the sensor 4. A separate measuring instrument, which is not described herein, measures the diameter of the tree in a manner known per se. The computer uses the diameter of the tree and the location information it has received from the sensor through a saw flange data line 14, to calculate how much of the diameter has been sawed at each given time and what the surface area of the tree being sawed is. On the basis of this information, the computer controls the proportional valve through a command line 15 by indicating how large a surface of the stump requires treatment by biocide. The pressurized hydraulic oil lead through the proportional valve 13 runs the hydraulic motor 11 which then controls the biocide pump 10. A correct amount of biocide is sucked from the container 4 at each time and lead under pressure to the supply channel of the saw flange 3, from which it is lead to the surface of the stump of the tree being felled.

The apparatus for treating stumps of the invention can also be implemented with a double-piston pump 16 shown in Figure 2 instead of the continuous pump 10 described in Figure 1.

The apparatus of the invention enables a continuous flow control of biocide during sawing. This is necessary because the speed of the saw and the need for the biocide being fed change as the sawing progresses, as does the counter-pressure caused by the surface against the supply channel openings in the saw flange. By correctly controlling the proportional valve 13, it is thus possible to optimize the consumption of the biocide and the covering of the stumps to achieve as advantageous and good a result as possible.

The apparatus for treating stumps of the invention also provides for easy cleaning of the supply channel of the saw flange 3. When the supply channel openings in the saw flange block, the proportional valve. 13 can quickly be fully opened, thus quickly increasing pressure inside the saw flange and the supply channel, which then removes the accumulated blockage by "shooting" it out. This cleaning operation can be performed controlled by the computer 9 automatically at given intervals or when the counter-pressure in the supply channel exceeds a certain limit, for instance. Then, a pressure transmitter is required in the biocide line 7 and 8 between the supply channel and the biocide pump 10 or 16 to transmit information to the computer.

The volume of the double-piston pump 16 being used determines the maximum amount of biocide available during one sawing. If a large amount of biocide is needed during sawing, a double-piston pump becomes unreasonably expensive. A continuous pump does not have this drawback, however. In addition, a continuous pump can be used for cleaning the felling machine, for instance, when it is not used for treating stumps. Then, the container only needs to be filled with water, and a cleaning element and a hose with a quick disconnect fitting needs to be connected to its output.

It should be understood that the above description and the related drawings are only intended to illustrate the present invention. Thus, the invention is not limited to the above or to the embodiment defined in the claims, but it is obvious to persons skilled in the art that many variations and modifications of the invention are possible within the scope of the inventive idea disclosed in the attached claims.

## Claims

1. A method for treating stumps, in which method biocide is supplied to at least one supply channel in a saw flange (3) of a cutting saw (1) in a felling machine, the flow of biocide being controlled by a pump (10, 16) operating by means of a pressure medium and being controlled by a computer (9), the pump directing the biocide during sawing to a stump of a tree (2) being felled through the saw flange, a measuring instrument being arranged to measure the diameter of the tree and the location of the saw flange (3) being read at each time of cutting with respect to the trunk of the tree being cut by a sensor (4), and the information regarding the diameter of the tree and the location of the saw flange (3) are fed to the computer (9) which regulates the pump (10, 16), **characterized in that**
the flow of biocide directed to the stump of the tree (2) during sawing being adjusted to be proportional to the surface of the tree trunk at the respective location of the cutting saw.

2. A method as claimed in claim 1, **characterized in that** the proportional valve (13) running the pump is opened by the computer (9) so that the pressure in the pipeline (6, 7, 8) supplying the biocide to the saw flange (3) is increased quickly above the normal working pressure for the purpose of cleaning any blockage in the supply channel in the saw flange.

3. A method as claimed in claim 1 or 2, **characterized in that** the pump (10) is disconnected from the sawing device (1), the biocide in the container (5) is replaced with water, and a hose furnished with a cleaning element is connected to the pump, the pump thus being applied as a cleaning device.

## Patentansprüche

1. Verfahren zum Behandeln von Baumstümpfen, wobei in dem Verfahren Biozid zu mindestens einem Versorgungskanal in einem Sägenrand (3) einer Schneidsäge (1) in einer Fällmaschine zugeführt wird, wobei der Biozidfluß durch eine Pumpe (10, 16) gesteuert wird, die mit Hilfe eines Druckmediums arbeitet und von einem Computer (9) gesteuert wird, wobei die Pumpe das Biozid während des Sägens durch den Sägenrand zu einem Baumstumpf eines Baums (2) leitet, der gefällt wird, wobei ein Meßinstrument angeordnet ist, um den Durchmesser des Baums und den Ort des Sägenrandes (3) zu messen, welche zu jedem Sägezeitpunkt relativ zu dem Baumstamm, der gefällt wird, von einem Sensor (4) abgelesen werden, wobei die Informationen hinsichtlich des Durchmessers des Baums und des Orts des Sägenrands (3) an den Computer (9) zugeführt werden, welcher die Pumpe (10, 16) regelt, **dadurch gekennzeichnet, daß**
der auf den Stumpf des Baums (2) gerichtete Biozidfluß während des Sägens so eingestellt wird, daß er proportional zu der Oberfläche des Baumstamms an dem jeweiligen Ort der Schneidsäge ist.

2. Verfahren nach Anspruch 1, **dadurch gekennzeichnet, daß** das Proportionalventil (13), das die Pumpe antreibt, von dem Computer (9) geöffnet wird, so daß der Druck in der Rohrleitung (6, 7, 8), welche das Biozid an den Sägenrand (3) liefert, zum Zweck der Reinigung jeglicher Verstopfung in dem Versorgungskanal in dem Sägenrand schnell über den normalen Arbeitsdruck erhöht wird.

3. Verfahren nach Anspruch 1 oder 2, **dadurch gekennzeichnet, daß** die Pumpe (10) von der Sägevorrichtung (1) getrennt wird, das Biozid in dem Behälter (5) durch Wasser ersetzt wird und ein mit einem Reinigungselement ausgestatteter Schlauch mit der Pumpe verbunden wird, wobei die Pumpe auf diese Weise als eine Reinigungsvorrichtung eingesetzt wird.

## Revendications

1. Procédé pour le traitement des souches d'arbres, dans lequel procédé on fournit du biocide à au moins un canal d'alimentation se trouvant dans un bord de scie (3) d'une scie de coupe (1) d'une machine d'abattage d'arbres, l'écoulement du biocide étant commandé par une pompe (10, 16) agissant par l'intermédiaire d'un milieu de pression et étant commandé par un ordinateur (9), la pompe dirigeant le biocide, pendant le sciage, sur la souche d'un arbre (2) qu'on est en train d'abattre au moyen du bord de scie, un instrument de mesure étant disposé de façon à mesurer le diamètre de l'arbre et la position du bord de scie (3) étant lue par un capteur (4), à chaque moment de la coupe, par rapport au tronc de l'arbre en train d'être coupé, et les informations concernant le diamètre de l'arbre et la position du bord de scie (3) sont envoyées à l'ordinateur (9), lequel régule la pompe (10, 16),
**caractérisé en ce que** l'écoulement du biocide dirigé sur la souche de l'arbre (2) pendant le sciage est ajusté de façon à être proportionnel à la surface du tronc d'arbre à l'emplacement respectif de la scie de coupe.

2. Procédé selon la revendication 1, **caractérisé en ce que** la vanne proportionnelle (13) faisant marcher la pompe est ouverte par l'ordinateur (9) de façon que la pression régnant dans la canalisation (6, 7, 8) fournissant le biocide au bord de scie (3) augmente rapidement au-dessus de la pression de travail normal dans le but de nettoyer tout blocage présent dans le canal d'alimentation se trouvant dans le bord de scie.

3. Procédé selon la revendication 1 ou 2, **caractérisé en ce que** la pompe (10) est déconnectée du dispositif de sciage (1), le biocide se trouvant dans le conteneur (5) est remplacé par de l'eau, et un tube recevant un élément de nettoyage est connecté à la pompe, la pompe étant donc appliquée en tant que dispositif de nettoyage.
